# EUROPEAN PATENT APPLICATION

(11) **EP 2 299 142 A1**
(43) Date of publication of application: **23.03.2011**
(21) Application number: 09794452.4
(22) Date of filing: 07.07.2009
(51) Int. Cl.: F16D 65/097

(54) **PAD CLIP FOR DISK BRAKE DEVICE**

(30) Priority: 11.07.2008 JP 2008181333
(71) Applicant: Akebono Brake Industry Co., Ltd., Tokyo 103-8534 (JP)
(72) Inventor: SHIMAMURA, Kenichi, Chuo-ku Tokyo 103-8534 (JP)
(74) Representative: Grünecker, Kinkeldey, Stockmair & Schwanhäusser Anwaltssozietät
(86) International application number: PCT/JP2009/062396
(87) International publication number: WO 2010/005008

(57) **Abstract**

A pad clip for a disc brake apparatus is provided with a sandwiching portion for sandwiching a projecting portion formed in a support member of the disc brake apparatus. The sandwiching portion includes an upper hold piece, a lower hold piece, and a connecting piece for connecting the upper hold piece and lower hold piece to each other. The upper hold piece includes a hold claw having a leading end urged toward an upper surface of the projecting portion and in contact with a vertically extending wall surface of a recessed groove formed in the projecting portion, and a spring piece for urging the hold claw. When the sandwiching portion sandwiches the projecting portion, the spring piece is not in contact with the upper surface of the projecting portion.

## Description

### Technical Field:

The present invention relates to a pad clip for use in a disc brake apparatus, and specifically relates to a pad clip of a type which is used to sandwich a projecting portion formed in a support member.

### Background Art:

As a pad clip for a disc brake apparatus, there are known a pad clip of a type which is used to sandwich a projecting portion formed in a torque receiving portion of a support member or the like; and, a pad clip of a type in which there is formed a recessed portion in the torque receiving portion and the pad clip is spread and held in the recessed portion. In any type of pad clip which obtains a holding force for the torque receiving portion in these manners, there is found a problem that it must be prevented from being removed from the torque receiving portion and must be enhanced in its close contact property with respect to the torque receiving portion.

In Patent Document 1, there is disclosed a method for solving the above problem. In Fig. 21, there is shown a pad clip disclosed in Patent Document 1. As shown in Fig. 21, according to the structure of Patent Document 1, in an upper portion (sandwiched portion) 1a of a torque receiving portion 1, there is formed a groove 2, a claw 4 is cut out from a vicinity of a center of a leg portion of a pad clip 3, and the claw 4 is caught by the groove 2 formed in the torque receiving portion 1, whereby the pad clip 3 is prevented from being removed from the torque receiving portion 1 of the support member.

### [Prior Art Document]

### [Patent Document]

[Patent Document 1]: JP-U-59-067635

The above structure is able to prevent the pad clip against removal from the torque receiving portion. Also, due to a propping force of the claw, the pad clip can be pressed against the torque receiving portion to thereby enhance the close contact property of the pad clip with respect to the torque receiving portion.

Surely, it is expected that the pad clip having the above structure is able to its removal preventive effect and close contact property with respect to the torque receiving portion.
However, according to the conventional pad clip, an action of sandwiching the projecting portion of the torque receiving portion is carried out by a whole (including the claw) of an upper hold piece and a lower hold piece constituting a sandwiching portion of the pad clip. Due to this, in an operation to form the pad clip, there are many portions where dimensions must be set with precision. This increases a manufacturing cost of the pad clip. Further, since a multiple portions of the pad clip are in contact with the torque receiving portion, a dimensional precision has large influences, which can worse a stability of an attitude of the pad clip when a pad is assembled.

### Summary of Invention:

The invention provides a pad clip for a disc brake apparatus which can stably provide a holding force and a close contact property with respect to a torque receiving portion, can reduce its manufacturing cost, and can stabilize its attitude when assembled.

According to one or more embodiments of the invention, a pad clip for a disc brake apparatus is provided with a sandwiching portion for sandwiching a projecting portion formed in a support member of the disc brake apparatus. The sandwiching portion includes an upper hold piece, a lower hold piece, and a connecting piece for connecting the upper and lower hold pieces with each other. The upper hold piece includes a hold claw having a leading end to be urged toward the upper surface of the projecting portion and in contact with the vertically extending wall surface of a recessed groove formed in the projecting portion, and a spring piece for urging the hold claw. The spring piece is configured not to be in contact with the upper surface of the projecting portion when the sandwiching portion sandwiches the projecting portion. Here, when the hold claw is in contact with the wall surface of the recessed groove formed in the upper surface of the projecting portion and is further urged against the upper surface of the projecting portion, the hold claw is able to fulfill a function to prevent the pad clip against removal.

The hold claw may also be structured by cutting out at least a portion of the upper hold piece and then by positioning the leading end of the thus cut-out plate piece between the spring piece and lower hold piece in the vertical direction. In this structure, a parts-layout-efficiency-in-blank-plate of the pad clip can be enhanced.

The pad clip for a disc brake apparatus may also include a leg portion base end portion which is disposed on an end portion of the upper hold piece in a side which is not in contact with the connecting piece. The hold claw may also be structured by cutting out at least a portion of the leg portion base end portion, bending the thus cut-out plate piece toward the lower hold piece, and then positioning the leading end of the thus cut-out plate piece between the spring piece and lower hold piece in the vertical direction. This structure can also enhance the parts-layout-efficiency-in-blank-plate of the pad clip.

The hold claw may also be structured by cutting out by bending a plate piece extended laterally of the spring piece toward the lower hold piece and then by positioning the leading end of the plate piece between the spring piece and the lower hold piece in the vertical direction. This structure can enhance the rigidity of the spring piece.

The hold claw may also be constituted of a pair of claws which are respectively provided on the width direction two ends of the spring piece. This structure can stabilize the sandwiching state of the projecting portion by the pad clip.

The pad clip for a disc brake apparatus may also further include an axial direction movement preventive claw which is formed in the hold claw for sandwiching the projecting portion in the width direction. This structure can prevent the pad clip from moving in the axial direction of a rotor.

Also, according to one or more embodiments of the invention, a pad clip for a disc brake apparatus is provided with a sandwiching portion for sandwiching a projecting portion formed in a support member provided in the disc brake apparatus. The sandwiching portion includes an upper hold piece, a lower hold piece and a connecting piece for connecting the upper and lower hold pieces with each other. The pad clip further includes a plate piece which is extended from an end portion of the upper hold piece which is not in contact with the connecting piece and is then bent toward the lower hold piece. The leading end of the plate piece is structured such that it can be in contact with the vertically extending wall surface of a recessed groove formed in the projecting portion; and, the leading end of the plate piece is structured such that it can be urged toward the upper surface of the projecting portion. And, the upper hold piece itself is structured such that, when the sandwiching portion sandwiches the projecting portion, the upper hold piece is not in contact with the upper surface of the projecting portion.

Also, the pad clip for a disc brake apparatus may be constituted of an inner side pad clip to be mounted onto the inner side of a support member and an outer side pad clip to be mounted onto the outer side of the support member. Further, the pad clip may further include an extension portion which is extended from the upper hold piece and is used to connect together the inner side and outer side pad clips. According to this structure, it is possible to provide a pad clip including two leg portions.

According to the pad clip for a disc brake apparatus having the above structure, the composing elements of the pad clip can be less influenced by the dimensional precision thereof; and, the pad clip can provide stable holding force and close contact performance with respect to the torque receiving portion, can reduce the manufacturing cost thereof, and can stabilize the attitude thereof when it is assembled to the support member.

Other aspects and advantages of the invention will be apparent from the following description and the appended claims.

### Brief Description of Drawings:

[Fig. 1]Fig. 1 is a perspective view a structure of a pad clip according to a first embodiment of the invention.
[Fig. 2]Fig. 2(A) is a top plan view of the pad clip according to the first embodiment; Fig. 2(B) is a front view of the pad clip according to the first embodiment; and, Fig. 2(C) is a side view of the pad clip according to the first embodiment.
[Fig. 3]Figs. 3(A) and 3(B) are respectively perspective views of a structure of a support member on which one of pad clips according to respective embodiments of the invention is to be mounted, for example, showing a state where the pad clip according to the first embodiment is to be mounted.
[Fig. 4]Fig. 4 is a partially enlarged view of a torque receiving portion formed in the support member.
[Fig. 5]Figs. 5(A) and 5(B) respectively show a state where the pad clip is mounted on the torque receiving portion.
[Fig. 6]Fig. 6 is a perspective view of a first applied mode of the pad clip according to the first embodiment.
[Fig. 7]Fig. 7 is a side view of a second applied mode of the pad clip according to the first embodiment.
[Fig. 8]Fig. 8(A) is a perspective view of a third applied mode of the pad clip according to the first embodiment; and, Fig. 8(B) is a side view of the third applied mode of a pad clip according to the first embodiment.
[Fig. 9]Fig. 9(A) is a perspective view of the structure of a pad clip according to a second embodiment of the invention; and, Fig. 9(B) shows a mounting state of the pad clip according to the second embodiment on a torque receiving portion.
[Fig. 10] Fig. 10 is a perspective view of a first applied mode of the pad clip according to the second embodiment.
[Fig. 11] Fig. 11 is a perspective view of a second applied mode of the pad clip according to the second embodiment, showing its mounting state on a torque receiving portion.
[Fig. 12] Fig. 12 is a perspective view of a third applied mode of the pad clip according to the second embodiment.
[Fig. 13] Fig. 13 is a perspective view of a fourth applied mode of the pad clip according to the second embodiment.
[Fig. 14] Fig. 14 is a perspective view of a fifth applied mode of the pad clip according to the second embodiment.
[Fig. 15] Fig. 15 is a perspective view of a sixth applied mode of the pad clip according to the second embodiment.
[Fig. 16] Fig. 16 is a perspective view of a seventh applied mode of the pad clip according to the second embodiment.
[Fig. 17] Fig. 17 is a perspective view of an eighth applied mode of the pad clip according to the second embodiment.
[Fig. 18] Fig. 18(A) is a perspective view of the structure of a pad clip according to a third embodiment of the invention; and Fig. 18(B) is a partially enlarged view of the pad clip according to the third embodiment, showing its mounting state on a torque receiving portion.
[Fig. 19] Fig. 19 is a perspective view of a pad clip structured such that its inner and outer leg portions are formed as separate portions.
[Fig. 20] Fig. 20 is a perspective view of an applied mode of a pad clip structured such that its inner and outer leg portions are formed as separate portions.

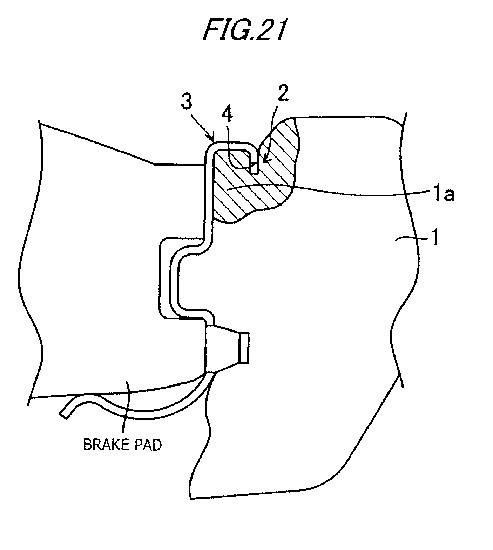

[Fig. 21] Fig. 21 is a side section view of a conventional pad clip, showing the relationship between the pad clip and a torque receiving portion.

### Description of Embodiments:

Now, description will be given below specifically of pad clips for disc brake apparatus according to exemplary embodiments of the invention with reference to accompanying drawings.

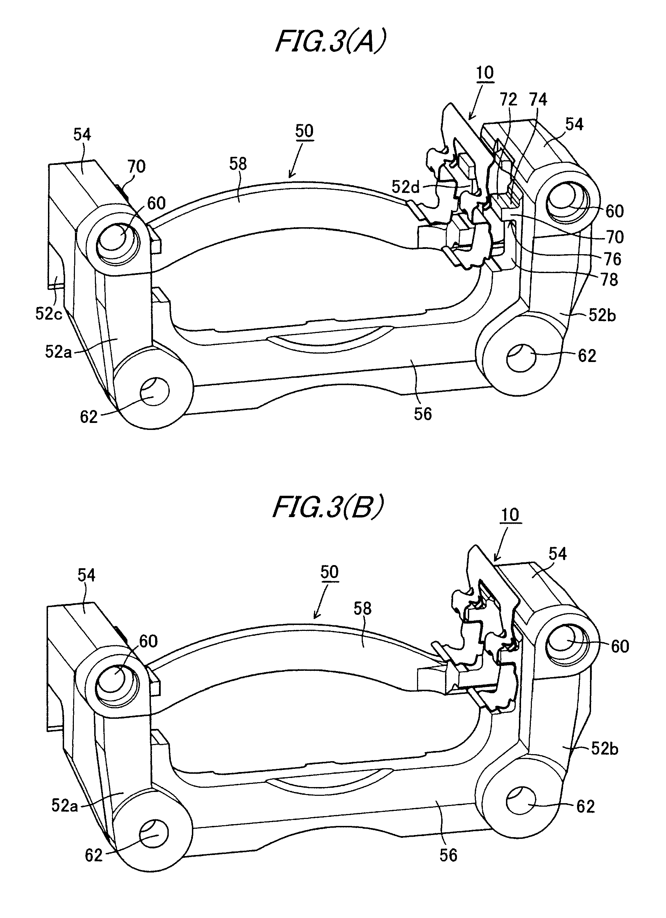

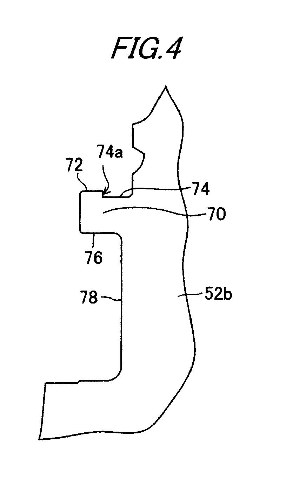

Description will be given below of a support member 50, onto which one of pad clips of the embodiments of the invention is to be mounted, with reference to Figs. 3(A), 3(B) and 4. Specifically, Fig. 3(A) is a perspective view of the support member 50, showing a state thereof before the pad clip is mounted onto the support member 50; and, Fig. 3(B) is a perspective view of the support member 50, showing a state thereof in which the pad clip has been mounted on the support member 50. Fig. 4 is a partially enlarged view of a torque receiving portion formed in the support member 50. Here, in Figs. 3(A) and 3(B), as an example, there is shown a state in which a pad clip according to a first embodiment of the invention is mounted on the support member 50. However, a pad clip according to a second embodiment and a pad clip according to a third embodiment can also be mounted onto this support member 50.

The support member 50 includes a plurality of torque receiving portions and a frame which is used to connect the plurality of torque receiving portions to each other. The torque receiving portions are formed on the rotational entrance side (in Fig. 3, on the left side) of a rotor (not shown) and on the rotational exit side (in Fig. 3, on the right side) of the rotor as well as on the inner and outer sides of the rotor, respectively. The inner side torque receiving portions 52a, 52b of the support member 50 are respectively connected to the outer side torque receiving portions 52c, 52d thereof through their respective support bridge portions 54 to thereby form an integral body. Also, the inner side torque receiving portion 52a to be formed on the rotational entrance side of the rotor and the inner side torque receiving portion 52b to be formed on the rotational exit side (in Fig. 3, on the right side) of the rotor are connected together by a main frame 56; whereas, the outer side torque receiving portion 52c to be formed on the rotational entrance side of the rotor and the inner side torque receiving portion 52d to be formed on the rotor rotational exit side are connected together by a sub frame 58.

The thus structured support member 50 is used in a floating caliper type disc brake apparatus and, in each support bridge portion 54, there is formed a hole 60 for insertion of a slide pin which is used to slidably mount a caliper. Also, in the main frame 56, there are formed female screw holes 62 threadedly engageable with bolts which are used to fix the support member to a vehicle or the like.

Each of the torque receiving portions 52 (the inner side torque receiving portions 52a, 52b and outer side torque receiving portions 52c, 52d) of the support member 50 includes a projecting portion 70 and a torque receiving surface 78. When the support member is viewed from the front surface thereof, the shape of the projecting portion 70 provides substantially a rectangular shape. The upper surface 72 and lower surface 76 of the projecting portion 70 are respectively sandwiched by and between the sandwiching portions 16a and 16b of a pad clip 10. In the upper surface 72 of the projecting portion 70 of the torque receiving portion 52 shown in Figs. 3(A), 3(B) and 4, there is formed a recessed groove 74 which extends in the width direction of the torque receiving portion 52 (when the support member 50 is viewed from the front surface thereof, in the depth direction thereof, that is, along the axial direction of the rotor (not shown). The recessed groove 74 is formed on the base end side of the projecting portion 70. When the support member 50 is viewed from the front surface thereof, the projecting portion 70 has a shape the width of which is thicker on the leading end side thereof. The thicker leading end side of the projecting portion 70 can prevent the removal of the pad clip 10 when the upper and lower surfaces of the projecting portion 70 are sandwiched by and between the sandwiching portions 16 (16a, 16b) of the pad clip 10.

The recessed groove 74 can be formed by mechanical working such as by broaching and by milling. In the recessed groove 74, there is formed a wall surface 74a which extends perpendicularly (extends in the vertical direction) and is used to connect together the base end side upper surface of the recessed groove 74, that is, the bottom surface of the recessed groove 74 and the leading end side upper surface 72 of the projecting portion 70.

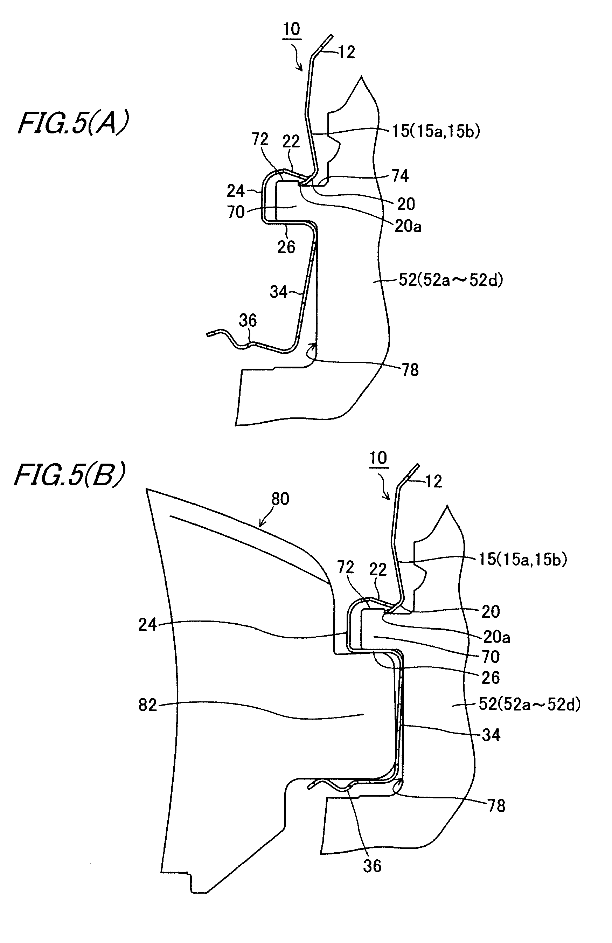

The torque receiving surface 78 is a portion which is used to store therein an ear portion 82 (see Fig. 5(B)) formed in a brake pad 80 (see Fig. 5(B)) and is also a portion with which the side surface of the ear portion 82 can be in contact. And, the torque receiving surface 78 is disposed downwardly of the above-mentioned projecting portion 70.

In the example shown in Figs. 3(A) and Fig. 3(B) of the support member 50 having the above structure, the outer shape thereof is formed by casting, and the projecting portion 70 and torque receiving surface 78 thereof are cut by mechanical working, thereby completing the production of the support member 50. According to this structure, the complicated shape formation (including the design property thereof) and the necessary dimension setting thereof can be carried out easily.

### <First Embodiment>

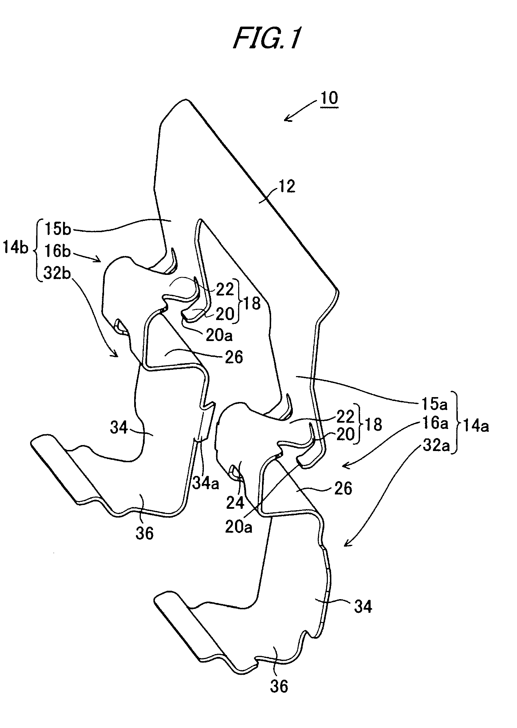

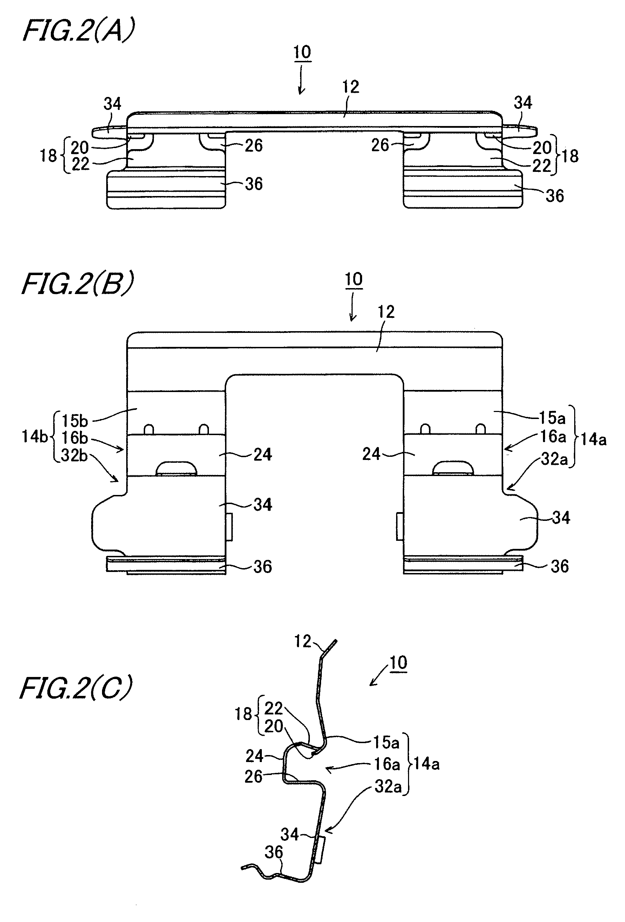

Next, description will be given below of a first embodiment (a basic mode) of a pad clip according to the invention. Here, Fig. 1 is a perspective view of a pad clip according to the first embodiment. Also, Fig. 2(A) is a top plan view of the pad clip, Fig. 2(B) is a front view of the pad clip, and Fig. 2(C) is a right side view of the pad clip, respectively. Referring to the structure of a pad clip 10 according to the first embodiment, two leg portions 14a and 14b, which are respectively disposed in the inner side torque receiving portions 52a, 52b and in the outer side torque receiving portions 52c, 52d, are unified together by a bridge portion 12. A material of the pad clip 10 may be a stainless steel plate or a rust prevention treated steel plate; and, to form the pad clip 10, a member cut into a flat plate may be bent formed.

The leg portions 14a and 14b respectively include leg portion base end portions 15a, 15b, sandwiching portions 16a, 16b, and pad hold portions 32a, 32b. The leg portion base end portion 15 (15a, 15b) is a plate piece which is interposed between the bridge portion 12 and sandwiching portion 16 (16a, 16b). The sandwiching portion 16 is a portion which sandwiches the projecting portion 70 formed in the torque receiving portion 52 of the above-mentioned support member 50 to thereby prevent the removal of the pad clip 10 and maintain the close contact property thereof. Specifically, the sandwiching portion 16 includes an upper hold piece 18 and a lower hold piece 26 for sandwiching the projecting portion 70 between them, and a connecting piece 24 for connecting together the upper and lower hold pieces 18 and 26.

The torque receiving portion 52 for mounting thereon the pad clip 10 according to the first embodiment, as described above, includes the recessed groove 74 formed in the upper surface 72 of the projecting portion 70. And, the upper hold piece 18 of the sandwiching portion 16 (16a, 16b) includes: a hold claw 20 to be urged against the upper surface side of the projecting portion 70, specifically, the bottom surface of the recessed groove 74; and, a spring piece 22 which, without being in contact with the upper surface 72 of the projecting portion 70, can apply such urging force to the hold claw 20 as allows the hold claw 20 to sandwich the projecting portion 70. Here, to form the hold claw 20 according to the first embodiment, a portion of the upper hold piece 18 may be cut out with the leg portion base end portion 15 as the base end thereof. According to this structure, since the spring piece 22 and hold piece 20 can be both cut out from a member having a limited area, a parts-layout-efficiency-in-blank-plate can be enhanced. Also, in the sandwiching portion 16 of the pad clip 10 according to the first embodiment, there is employed a structure in which the spring piece 22 is disposed in the central portion of the leg portion in the width direction thereof, and the hold claws 20 are disposed on the two ends of the spring piece 22. In this structure, the projecting portion 70 is sandwiched by and between the two ends of the leg portion 14. Owing to this, even in the case that the load of the brake pad 80 (see Fig. 5(B)) is changed due to the sliding motion of the brake pad 80 (that is, even in the case that the center of the brake pad 80 is changed from the width-direction center of the leg portion to the end portion side thereof), the mounting state of the pad clip 10 can be stabilized. Also, since the width of the spring piece 22 can be changed by the size (width) of the hold claw 20, the sandwiching force and flexibility of the spring piece 22 can also be adjusted.

Referring to the specific shape of the spring piece 22, in order for the hold claws 20 to generate an urging force to be applied to the upper surface 72 of the projecting portion 70, the spring piece 22 has such an inclination as can reduce the distance between the lower hold piece 26 and itself from the side end portion of the connecting piece 24 to the side end portion of the leg portion base end portion 15. When the thus shape-formed spring piece 22 is elastically deformed in an expanded manner and is mounted onto the projecting portion 70 of the torque receiving portion 52, there can be generated a force which allows the hold claws 20 to sandwich the projecting portion 70 between them.

Each hold claw 20 is formed in such a manner that the side thereof extending from the leg portion base end side 15 to the connecting piece 24 side is formed as the leading end side thereof, while the leading end 20a thereof is interposed between the spring piece 22 and lower hold piece 26. Due to this, the leading end 20a of the hold claw 20, when the pad clip 10 is mounted onto the torque receiving portion 52, can be in contact with the wall surface 74a of the recessed groove 74 formed in the upper surface 72 of the projecting portion 70. In the case that the leading end 20a of the hold claw 20 is in contact with the wall surface 74a of the recessed groove 74, the hold claw 20 serves as a wedge, thereby being able to prevent the pad clip 10 against removal. That is, the hold claw 20 has two operations: one operation is to press against the upper surface 72 of the projecting portion 70 from above to thereby sandwich it; and, the other is to bring the leading end 20a into contact with the wall surface 74a of the recessed groove 74 to thereby prevent the removal of the pad clip 10.

In the case that the sandwiching portion 16 is structured in the above-mentioned manner, such portions of the sandwiching portion 16 as must be in contact with the upper surface 72 (actually, the bottom surface of the recessed groove 74) of the projecting portion 70 exist only on the leading end 20a side of the hold claw 20. In this case, the number of portions of the sandwiching portion 16 to be in contact with the projecting portion 70 when sandwiching the projecting portion 70 can be reduced, thereby being able to reduce the number of portions the dimensions of which must be set with high precision when the sandwiching portion 16 is form-shaped. Therefore, the number of easily shape-formable portions increases, which can reduce the manufacturing cost of the pad clip. Also, by sandwiching the projecting portion 70 at reduced number of contact points having high-precision dimensions, the attitude of the pad clip in assembling can be stabilized.

Also, the pad hold portion 32 is a portion which is used to hold the ear portion 82 (see Fig. 5(B)) of the brake pad 80 (see Fig. 5(B)) to be mounted onto the support member 50. The pad hold portion 32 is constituted of: the lower hold piece 26 of the sandwiching portion 16; a pad hold piece 36 disposed opposed to the lower hold piece 26; and, a torque receiving piece 34 for connecting together the lower hold piece 26 and pad hold piece 36. The torque receiving piece 34 is formed such that an angle between the above-mentioned lower hold piece 26 and itself is within the range of acute angles. Therefore, the torque receiving piece 34 employs a shape which, when the pad clip 10 is mounted on the torque receiving portion 52 of the support member 10, extends in a direction to part away from the torque receiving surface 78 of the torque receiving portion 52 (see, for example, Fig. 5(A)). Also, on the torque receiving piece 34, specifically, on the rotor (not shown) side lateral portion thereof, there is provided an axial direction movement preventive claw 34a which can prevent the pad clip 10 from moving in the axial direction of the rotor. And, the pad hold piece 36 is disposed such that it extends in the disposition direction of the brake pad 80 substantially at right angles to the torque receiving piece 34. Therefore, a space, which is formed between the lower hold piece 26 and pad hold piece 36, employs such shape as is narrow on the entrance side and widens as it approaches the torque receiving piece 34. Here, the distance between the lower hold piece 26 and pad hold piece 36 in the vicinity of the torque receiving piece 34, preferably, may be equal to the width (height) of the ear portion 82 of the brake pad 80.

According to this structure, the pad hold piece 36 is urged or pressed against the lower surface of the ear portion 82 of the brake pad 80, thereby being able to hold the brake pad stably. When inserting the ear portion 82 of the brake pad 80, by increasing the distance between the lower hold piece 26 and pad hold piece 36, the torque receiving piece 34 is warped. Due to this, the torque receiving piece 34 is able to generate a spring action between the torque receiving portion 52 and itself, which can also relieve the impact of the brake pad 10 when it collides with the torque receiving surface 78 of the torque receiving portion 52.

To mount the pad clip 10 having the above-mentioned characteristics onto the support member 50, as shown in Figs. 3 to Fig. 5(B), while the inclination surface thereof extending from the leg portion base end portion 15 to the leading end 20a of the hold claw 20 and the arc-shaped bent portion intervening between the lower hold piece 26 and torque receiving piece 34 are used as mounting guides, the leading end 20a of the hold claw 20 may be slid onto the upper surface 72 of the projecting portion 70 and the lower hold piece 26 may be slid onto the lower surface 76 of the projecting portion 70 respectively, whereby the sandwiching portion 16 of the pad clip 10 may be pushed into the projecting portion 70 of the torque receiving portion 52.

Since the leading end 20a of the hold claw 20 and lower hold piece 26 respectively constituting the sandwiching portion 16 are respectively urged or pressed against the upper surface 72 and lower surface 76 of the projecting portion 70, when the leading end 20a of the hold piece 20 reaches the recessed groove 74 of the upper surface 72, the leading end 20a of the hold piece 20 is urged or pressed against the bottom surface of the recessed groove 74. And, when the leading end 20a of the hold piece 20 falls down into the recessed groove 74, it is in contact with the wall surface 74a o the recessed groove 74 to serve as a wedge which can prevent the pad clip 10 pushed onto the projecting portion 70 of the torque receiving portion 52 from moving back in a direction to part away from the torque receiving portion 52.

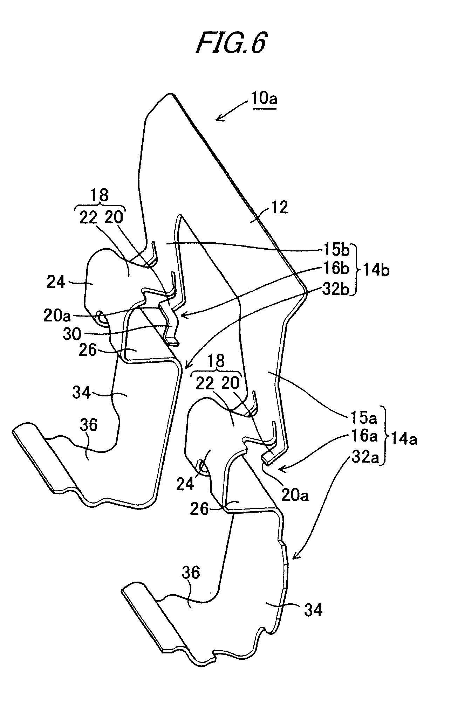

Next, description will be given below of applied modes of a pad clip according to the first embodiment. Firstly, description will be given below of a first applied mode of a pad clip according to the first embodiment with reference to Fig. 6. A pad clip 10a according to the first applied mode of the first embodiment includes an axial direction movement preventive claw 30 which exists on the side surface of the hold claw 20 disposed on the rotor side, that is, on the inside of the pad clip 10 and also which is used to prevent the pad clip 10 from moving in the width direction of the torque receiving portion 52, that is, in the axial direction of a rotor (not shown).

Two axial direction movement preventive claws 30, which are provided on the two leg portions 14 respectively, can be urged or pressed against the side surface of the projecting portion 70 of the torque receiving portion 52 from the inside of the pad clip 10. Thus, the axial direction movement preventive claw 30 can prevent the pad clip 10 from moving in the axial direction of the rotor and also can prevent the pad clip 10 from being removed and from floating up. To provide the axial direction movement preventive claw 30 that can play such roles, a plate piece, which is extended toward the inside of the leg portion 14 (14a, 14b), may be bent toward the projecting portion 70 (in Fig. 1, in the downward direction). Also, in order that, on the leading end 20a side of the axial direction movement preventive claw 30, there can be generated an urging force to be applied to the side surface of the projecting portion 70, the bent shape of the axial direction movement preventive claw 30 is formed substantially as an S-like shape.

Here, in the example shown in Fig. 6, although the axial direction movement preventive claw 30 is provided only on the hold claw 20 disposed on the inside of the pad clip 10, it may also be provided on both of the two hold claws 20 which are respectively disposed on the two ends of the spring piece 22. In this case, the two axial direction movement preventive claws 30 respectively provided on the two hold claws 20 are respectively urged or pressed against the side surfaces of the projecting portion 70, whereby the projecting portion 70 is sandwiched from the two side surfaces thereof by the two axial direction movement preventive claws 30. This can enhance the performance of the operation to prevent the hold claw 20 of the sandwiching portion 16 from floating up from the bottom surface of the recessed groove 74. Also, such prevention of the floating-up of the hold claw 20 can effectively prevent the removal of the pad clip 10.

In this manner, when the hold claws 20 are disposed on the two end portions of the spring piece 22 and axial direction movement preventive claws 30 are provided on the side surfaces of the hold claws 20, the close contact performance of the pad clip 10 with respect to the torque receiving portion 52 can be enhanced and also the stability of the pad clip 10 in its close contact state can be enhanced. Also, in the case that the axial direction movement preventive claw 34 (see Fig. 1) which has been provided as a separate member in the prior art technology is provided on the hole claw 20, a single plate piece is allowed to carry out two operations, thereby being able to omit the conventionally separately provided axial direction movement preventive claw 34.

Here, even in the case that the axial-direction movement preventive claws 30 provided on the hold claws 20 on the inside of the two leg portions 14 are provided on the hold claws 20 which are respectively disposed on the outside of the two leg portions 14, of course, there can be provided similar effects.

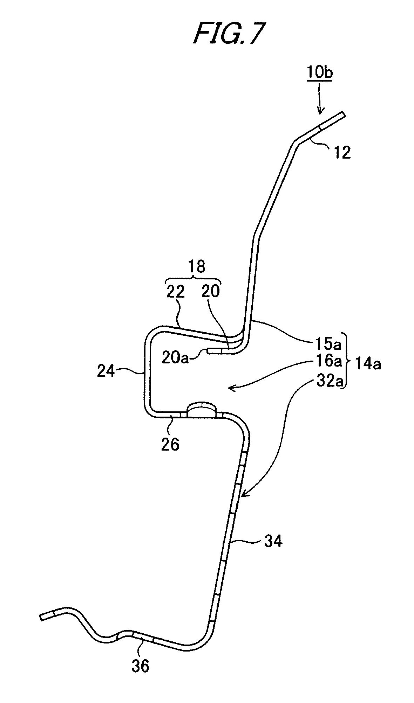

Next, description will be given below of a second applied mode of a pad clip according to the first embodiment with reference to Fig. 7. The pad clip 10b according to the second applied mode is different from the pad clip 10 according to basic mode of the first embodiment shown in Figs. 1 to 5(B) in the shape of the hold claw 20.

Specifically, the hold claw 20 of the pad clip 10 according to basic mode of the first embodiment shown in Figs. 1 to 5(B) is structured such that it is extended from the leg portion base end portion 15 toward an intermediate position between the connecting piece 24 and lower hold piece 26 and, after then, it is extended toward the connecting piece 24, whereby the leading end 20a of the hold claw 20 can be in contact with the wall surface 74a of the recessed groove 74. On the other hand, the hold claw 20 according to the second applied mode of the first embodiment is structured such that it is firstly extended from the leg portion base end portion 15a (15b) onto the extension line thereof and, after then, it is bent and extended toward the connecting piece 24, whereby the leading end 20a thereof can be directed in the projecting direction of the projecting portion 70 and thus can be in contact with the wall surface 74a of the recessed groove 74.

In the case that the hold claw 20 is formed to have the above shape, the contact distance between the hold claw 20 and the bottom surface of the recessed groove 74 can be increased. This can stabilize the pressure of the hold claw 20 on the upper surface of the projecting portion 70 (the bottom surface of the recessed groove 74).

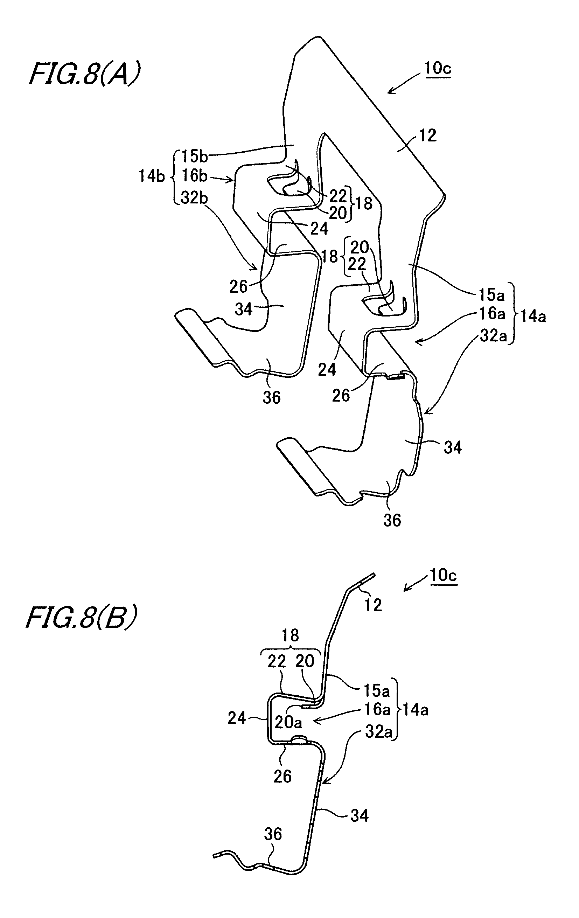

Next, description will be given below of a third applied mode of a pad clip according to the first embodiment with reference to Figs. 8(A) and 8(B). Fig. 8(A) is a perspective view of a pad clip according to the third applied mode of the first embodiment, while Fig. 8(B) is a right side view of the pad clip according to the third applied mode of the first embodiment. The pad clip 10c according to the third applied mode of the first embodiment is different from the pad clip 10 according to the basic mode of the first embodiment in the position and number of hold claws.

Specifically, the pad clip 10c according to the third applied mode of the first embodiment employs a structure that a single hold claw 20 is provided and it is disposed in the center of the upper hold piece 19. That is, oppositely to the above-mentioned basic mode, first and second applied modes of the first embodiment, two spring pieces 22 exist on the two ends of the hold claw 20. And, the hold claw 20 according to the third applied mode of the first embodiment is similar in shape to the hold claw 20 of the pad clip 10b according to the second applied mode. Since the shape of the present hold claw 20 is formed similar to that of the pad clip 10b according to the second applied mode, the contact area of the hold claw 20 with respect to the bottom surface of the recessed groove 74 formed in the upper surface 72 of the projecting portion 70 can be set wide. Thanks to this, even in the case that the number of hold claws 20 to be provided on the respective leg portions 14 (14a, 14b) is one and the upper surface of the projecting portion 70 (actually, the bottom surface of the recessed groove 74) is pressed using only the hold claw 20, the pressure of the upper surface of the projecting portion 70, that is, the sandwiching state of the projecting portion 70 by the sandwiching portions 16 (16a, 16b) can be stabilized.

### <Second Embodiment>

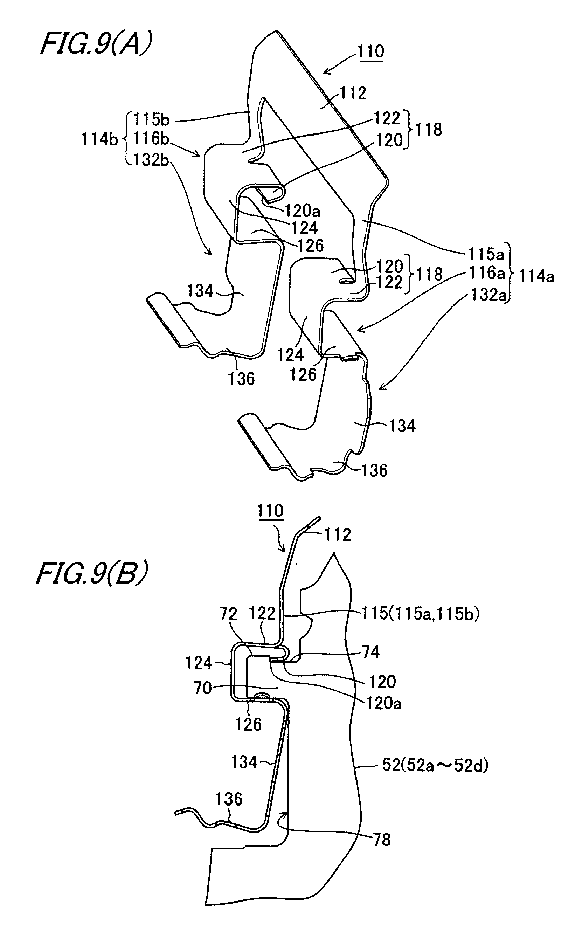

Next, description will be given below of a second embodiment (a basic mode thereof) of a pad clip for a disc brake apparatus according to the invention with reference to Figs. 9(A) and 9(B). Fig. 9(A) is a perspective view of a pad clip according to the second embodiment, while Fig. 9(B) is a side view of the pad clip according to the second embodiment, showing a state where it is mounted on a torque receiving portion. Also, the pad clip according to the second embodiment is substantially similar in structure to the pad clip according to the previously described first embodiment. Therefore, to the composing elements of the second embodiment which are similar in function to those of the first embodiment, there are given reference numerals which can be obtained by adding 100 to the reference numerals of the first embodiment; and thus, the detailed description thereof is omitted here. Here, in the case of the torque receiving portion of the support member, there can be used a similar portion to the first embodiment and, therefore, to the portions thereof which are similar in structure to those of the first embodiment, there are given the same reference numerals as in Figs. 3 to 5(B).

A pad clip 110 according to the second embodiment is different from the pad clip 10 according to the first embodiment in the manner of forming a hold claw and the shape of the hold claw. Specifically, in the pad clip 10 according to the first embodiment, by cutting out a portion of the upper hold piece 18, there are formed the spring piece 22 and hold claw 20. On the other hand, in the pad clip 110 according to the second embodiment, by cutting out a portion of a leg portion base end portion 114, there is formed a hold claw 120. Also, in the first embodiment, the hold claw 20 is formed by extending the leg portion base end portion 14 simply. On the other hand, in the second embodiment, a portion of a cut-out leg portion base end portion 114 is drawn backwardly of the base end portion of an upper hold piece 118 and is next bent toward a lower hold piece 126 and, after then, the leading end 120a of the hold claw 120 is turned toward a connecting piece 124, whereby the hold claw 120 has a so called hook shape.

In other words, to form the hold claw 120, a portion of the cut-out leg portion base end portion 114 may be fallen onto the extension line of the base end portion of the upper hold piece 118, and the leading end 120a thereof may be then interposed between the upper hold piece 118 and lower hold piece 126.

Here, in the case of the leading end 120a of the hold claw 120, similarly to the pad clip 10 according to the previously described first embodiment, when the pad clip 110 is mounted onto the torque receiving portion 52, the leading end 120a is disposed at a position where it can be in contact with the wall surface 74a of the recessed groove 74 formed in the upper surface 72 of the projecting portion 70. Also, the other remaining portions of the pad clip 110 are similar in structure to the pad clip 10 according to the first embodiment and thus the detailed description thereof is omitted here.

The thus structured pad clip can also provide similar effects to the pad clip 10 according to the first embodiment. Here, when the present structure is employed, conventionally, in the case of a pad clip including a claw portion, there has been pointed out that the efficiency of its assembling operation such as its removing and mounting operations is poor due to the high rigidity of the claw portion. However, since the leading end 120a can be lifted up from the recessed groove 74 by lifting the hook-shaped portion, the pad clip 110 can be removed from the support member 50 easily. Therefore, the pad clip 110 can be said that it is superior in the mounting and removing performance to the pad clip 10 according to the first embodiment.

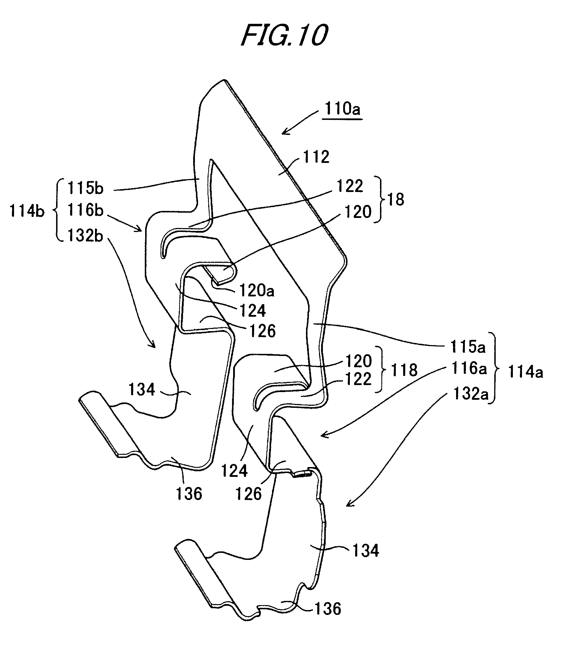

Next, description will be given below of applied modes of the pad clip according to the second embodiment with reference to Figs. 10 to 17. Firstly, description will be given below of a first applied mode of the second embodiment with reference to Fig. 10. In a pad clip 110a according to the first applied mode of the second embodiment, the cutting of the hold claw 120 provided from the leg portion base end portion 115 (115a, 115b) to the spring piece 122 is set deeper that than that of the basic mode of the second embodiment shown in Figs. 9(A) and 9(B). Specifically, the cutting is extended up to the connecting piece 124 to thereby divide the upper hold piece 118 into two sections. Owing to employment of this structure, the spring piece 122 and hold claw 120 respectively constituting the upper hold piece 118 are completely separated from each other and thus the urging force of the hold claw 120 can be changed only by the plate width, bending angle and the like of the hold claw 120. Here, in the case that the cutting depth can be adjusted within the upper hold piece 118, the spring constant of the spring piece 122 can be adjusted and thus the urging force of the hold piece 120 can also be adjusted.

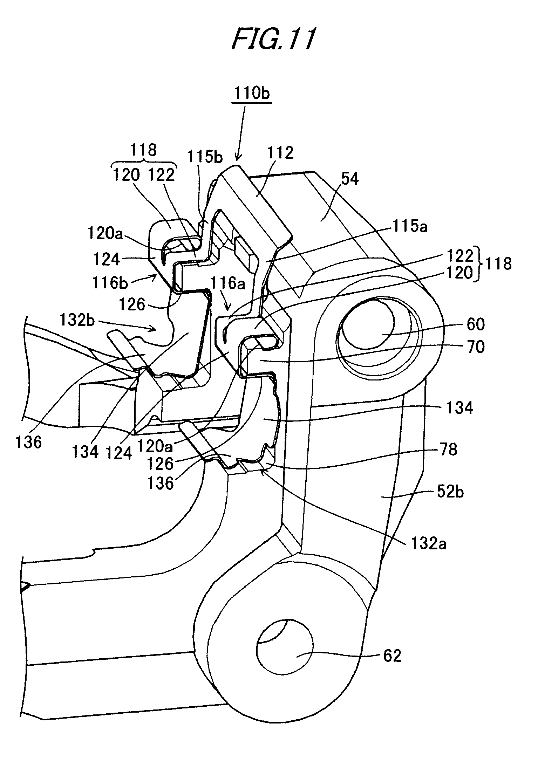

Next, description will be given below of a second applied mode of the second embodiment with reference to Fig. 11. A pad clip 110b according to the second applied mode of the second embodiment is based on the pad clip 110a according to the first applied mode of the second embodiment shown in Fig. 10, whereas the spring piece 122 and hold claw 120 are reversely disposed. Also, the pad clip 110b according to the second applied mode of the second embodiment is structured such that the U-shaped portion of the sandwiching portion 116 (116a, 116b) is reduced in size in order to allow the spring piece 122 to come closer to the upper surface 72 of the projecting portion 70, thereby generating a step between the spring piece 122 and hold claw 120. Even in the structure in which the forming position of the spring piece 122 is changed in this manner, there can be provided similar effects to the pad clip according to the first applied mode of the second embodiment.

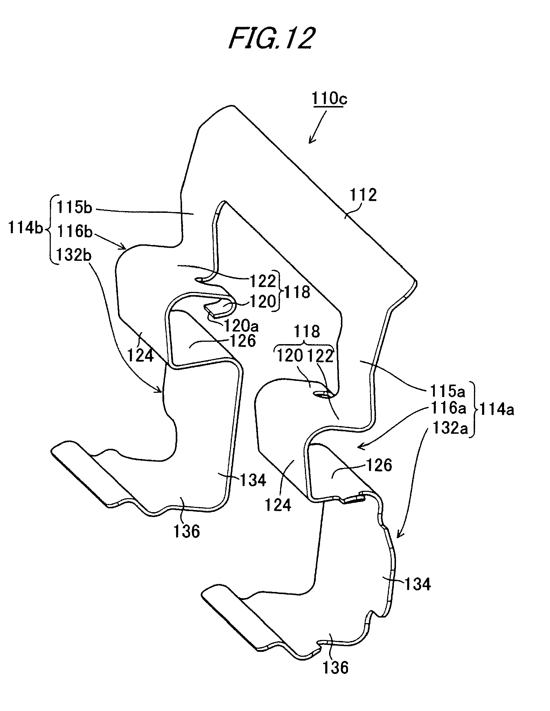

Next, description will be given below of a third applied mode of the second embodiment with reference to Fig. 12. In a pad clip 110c according to the third applied mode of the second embodiment, there is changed the occupation rate of a plate piece constituting the upper hold piece 118 interposed between the spring piece 122 and hold claw 120 of the pad clip 110 according to the basic mode of the second embodiment shown in Figs. 9(A) and 9(B). Specifically, in the pad clip 110c according to the third applied mode of the second embodiment, when compared with the pad clip 110 according to the basic mode of the second embodiment, the rate of the spring piece 122 is increased. In this structure, the plate width of the hold claw 120 is narrowed and the spring constant of the spring piece 122 is reduced. This can enhance the efficiency of the assembling operation of the pad clip 110c.

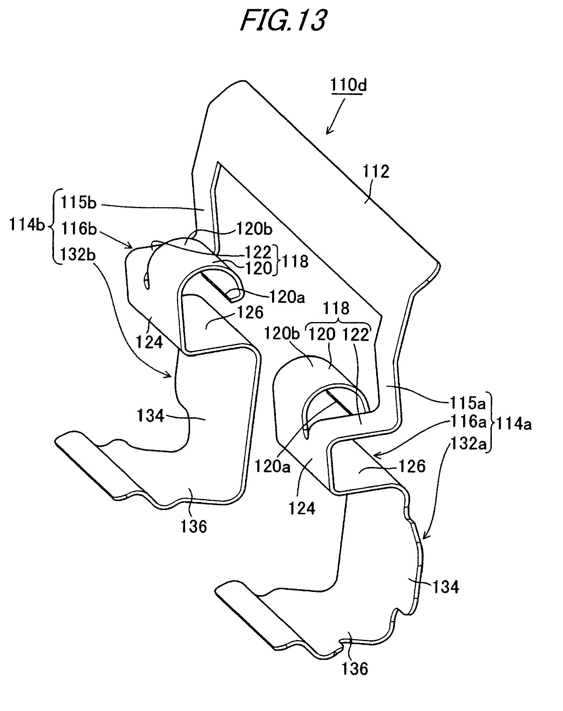

Next, description will be given below of a fourth applied mode of the second embodiment with reference to Fig. 13. A pad clip 110d according to the fourth applied mode of the second embodiment is basically similar in structure to the pad clip according to the first applied mode of the second embodiment shown in Fig. 10. However, the fourth applied mode is different from the first applied mode in the bending angle of the hold claw. Specifically, in the pad clip 110d according to the fourth applied mode of the second embodiment, the turned-back portion (bent portion) 120b of the hold claw is disposed upwardly of the sandwiching portion 116 and is formed to have a dome-like shape, and the leading end side of the dome-like shape is directed downwardly, that is, toward the lower hold piece 126 to thereby provide a hook-like shape which is extended from the connecting piece 124. And, since only the leading end 120a of the hold claw 120 directed toward the lower hold piece 126 is turned back toward the connecting piece 124, the leading end 120a can be caught onto the wall surface of the recessed groove 74. The pad clip 110d having this structure can also provide similar effects to the previously described applied modes of the second embodiment.

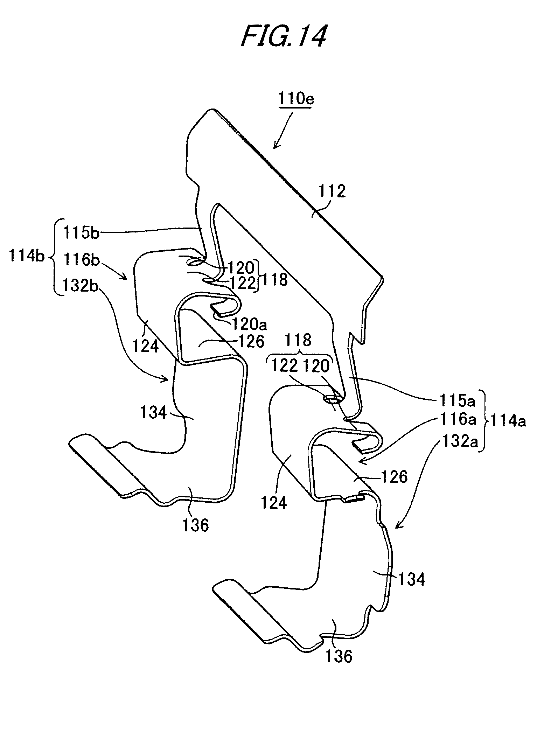

Next, description will be given below of a fifth applied mode of the second embodiment with reference to Fig. 14. A pad clip 110e according to the fifth applied mode of the second embodiment is different in the number of hold claws 120 from the pad clip 110 according to the basic mode of the second embodiment. That is, in the pad clip 110 according to the basic mode of the second embodiment, the leg portion base end portion 115 (115a, 115b) is cut out rather widely, and this is used as a hold claw 120. On the other hand, in the pad clip 110e according to the fifth applied mode of the second embodiment, the two ends of the leg portion base end portion 114 are cut out narrowly, whereby two hold claws 120 are formed in a leg portion 114.

In this structure, even in the case that the additional load is changed due to the sliding motion of the brake pad 80, the holding state of the projecting portion 70 can be stabilized.

Also, in the case that the hold claw 120 is formed according to the present applied mode, there may also be previously formed an axial direction preventive claw (see Fig. 6) on the side surface of the hold claw 120 shown in Fig. 14.

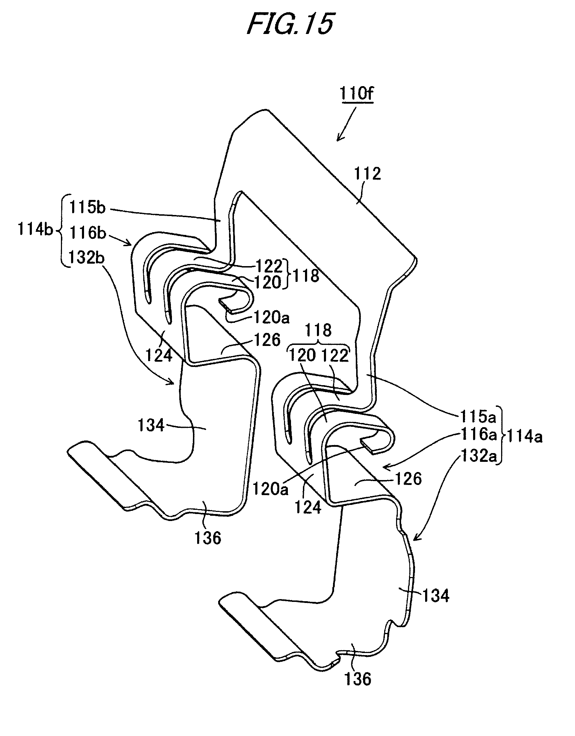

Next, description will be given below of a sixth applied mode of the second embodiment with reference to Fig. 15. A pad clip 110f according to a sixth applied mode of the second embodiment is a combination of the pad clip 110e according to the fifth applied mode of the second embodiment shown in Fig. 14 and the pad clip 110a according to the first applied mode of the second embodiment shown in Fig. 10. That is, in the pad clip 110f according to the sixth applied mode of the second embodiment, the depth of the cutting between the leg portion base end portion 122 and hold claw 120 of the pad clip 110e according to the fifth applied mode of the second embodiment is increased, and the upper hold piece 118 is divided into three. In this structure, there can be provided the effects according to the fifth applied mode of the second embodiment; and, in addition to this, by adjusting the plate width of the hold claw 120 itself and the depth of the cutting, the urging force of the hold claw 120 can be adjusted.

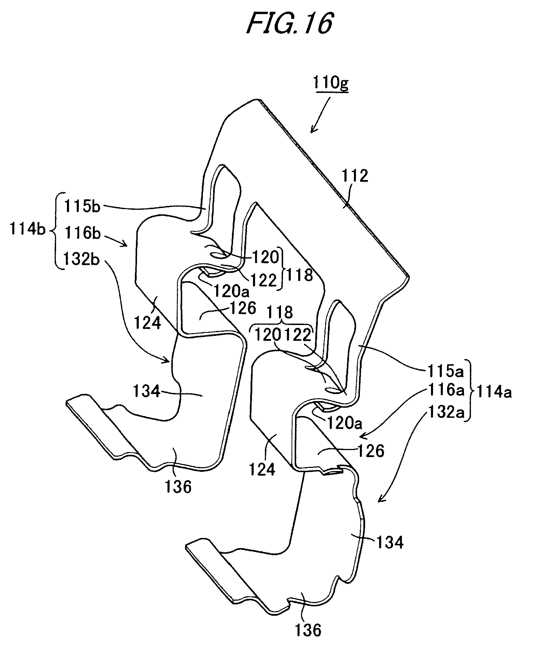

Next, description will be given below of a seventh applied mode of the second embodiment with reference to Fig. 16. In the pad clip 110g according to the seventh applied mode of the second embodiment, the central portion of the leg portion base end portion 122 of the leg portion 115 (114a, 114b) is cut out and the resultant cut-out piece is used as the hold claw 120. In this structure as well, there can be provided similar effects to the previously described various applied modes.

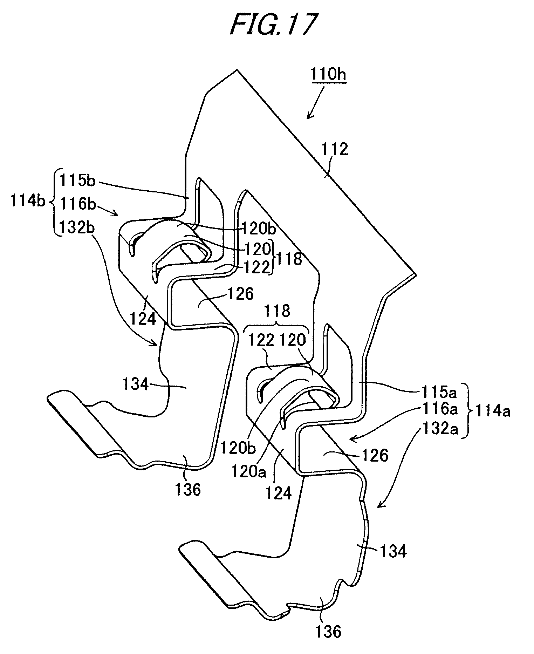

Next, description will be given below of an eighth applied mode of the second embodiment with reference to Fig. 17. In a pad clip 110h according to the eighth applied mode of the second embodiment, the cutting between the hold claw 120 and leg portion base end portion 115 is extended to the connecting piece 124 of the sandwiching portion 116, the turned-back portion 120b of the hold claw 120 is disposed upwardly of the sandwiching portion 116, and the leading end 120a of the hook-shaped hold claw 120 can be in contact with the wall surface 74a of the recessed groove 74 of the projecting portion 70 from obliquely above the base end portion of the projecting portion 70. In this structure as well, there can be provided similar effects to the previously described various applied modes.

### <Third Embodiment>

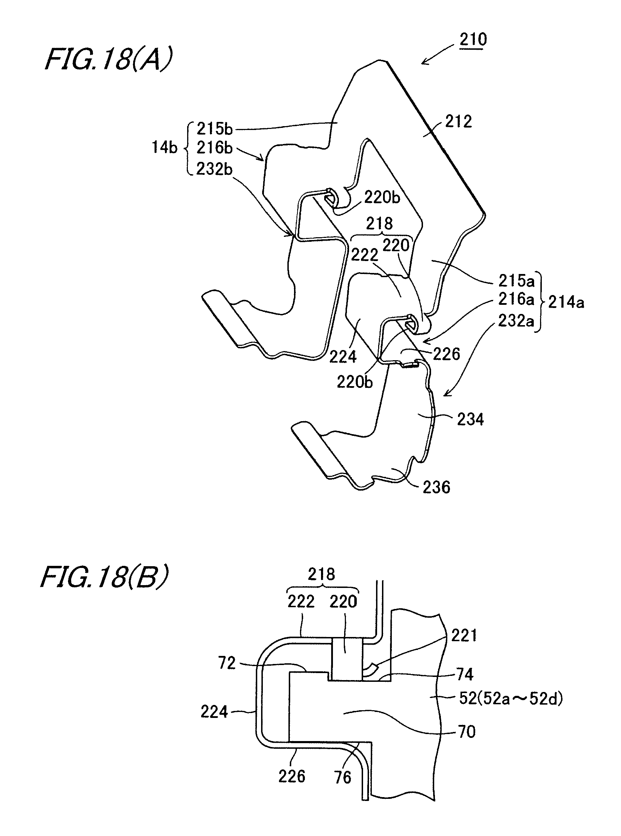

Next, description will be given below of a third embodiment of a pad clip for a disc brake apparatus according to the invention with reference to Figs. 18(A) and 18(B). Fig. 18(A) is a perspective view of a pad clip according to the third embodiment, while Fig. 18(B) is a partially enlarged view of the pad clip according to the third embodiment, showing a state where it is mounted on the torque receiving portion of a support member. Also, the pad clip according to the third embodiment is substantially the same in structure as the pad clip according to the previously described first embodiment. Therefore, the composing elements of the third embodiment having the same functions as those of the first embodiment are given reference numerals in which 200 are added to the reference numerals of the first embodiment, and thus the detailed description thereof is omitted here. Also, in the case of the torque receiving portion of the support member, since there can be used a similar portion to the first embodiment, to the portions thereof which have similar structures to the first embodiment, there are given the same reference numerals as Figs. 3 to 5(B).

A pad clip 210 according to the third embodiment is different from the previously described pad clips 10 and 110 according to the first and second embodiment in the structure of the sandwiching portion 216 (216a, 216b). Specifically, in the sandwiching portion 216 according to the third embodiment, on the two ends of the upper hold piece 218 in the width direction, there are provided two plate pieces respectively extended in the width direction, and the plate pieces are bent to thereby form hold claws 220, respectively.

More specifically, to form the hold claws 220 according to the third embodiment, the plate pieces respectively extended from the two end portions of the upper hold piece 218 may be bent toward the lower hold piece 226 and the leading ends of the plate pieces may be then turned back toward the center of the leg portion 214 (214a, 214b). The thus formed hold claw 220, when the pad clip 210 is viewed from front, has a U-like shape, and thus the neighboring portion of the leading end of the hold claw 220 can be pressed against the bottom surface of the recessed groove 74 formed in the upper surface 72 of the projecting portion 70.

According to the hold claw 220 having this structure, differently from the hold claws 20 and 120 of the pad clips 10 and 110 according to the previously described first and second embodiments, when the pad clip 210 is mounted on the torque receiving portion 52, the leading end side surface (side end 220b) of the hold claw 220 is in contact with the wall surface 74a of the recessed groove 74 formed in the upper surface 72 of the projecting portion 70. In this structure as well, the hold claw 220 can prevent the pad clip 210 against removal.

Here, in the pad clip according to the third embodiment, in such portion of the leading end side surface of the hold claw 220 as will not be in contact with the wall surface 74a of the recessed portion 74, there is formed an introduction portion 221 which, when mounting the pad clip 210 onto the torque receiving portion 52, can serve as a trigger for introduction of the pad clip 210. The introduction portion 221 may be formed of a plate piece which is extended from the leading end side surface of the hold claw 220 toward the upper hold piece 218 in an arc manner or linearly.

The other structures of the pad clip 210 are similar to the pad clips 10 and 110 according to the previously described first and second embodiments. The pad clip 210 having the above structure can also provide similar effects to the pad clips 10 and 110 according to the first and second embodiments.

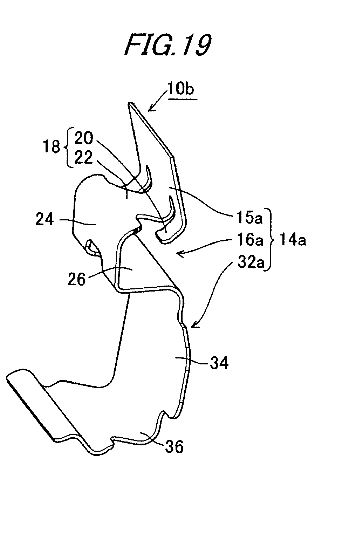

In all of the above described embodiments (first to third embodiments), description has been given to the effect that the two leg portions are formed into an integral body through the bridge portion, and the drawings show this similarly. However, a pad clip according to the invention also includes a structure in which, as shown in Fig. 19, a leg portion 14a disposed in the inner side torque receiving portions 52a, 52b and a leg portion 14b disposed in the inner side torque receiving portions 52c, 52d are separated from each other (a pad clip 10b shown in Fig. 19 is an example in which the pad clip 10 according to the first embodiment is formed in a separate manner).

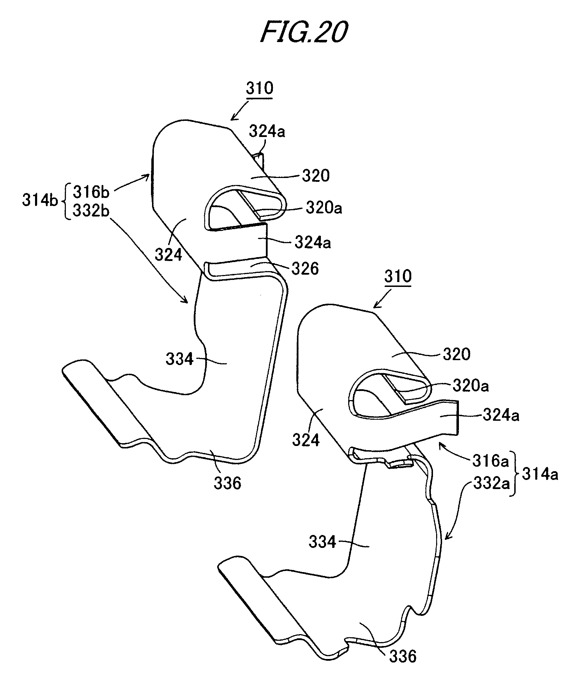

Also, in the case that the leg portion 14a disposed in the inner side torque receiving portions 52a, 52b and the leg portion 14b disposed in the inner side torque receiving portions 52c, 52d are separated from each other, there may also be employed such an embodiment as shown in Fig. 20. Here, in the embodiment shown in Fig. 20, the structure thereof is substantially similar to the structure of the above described first to third embodiments. Therefore, the portions of the embodiment shown in Fig. 20 having similar functions to the portions of the above described embodiments are given reference numerals in which 300 is added to the reference numerals shown in Fig. 1, and thus the detailed description thereof is omitted here.

In a pad clip 310 according to the embodiment shown in Fig. 20, there is omitted the leg portion base end portion that is formed in the above described first to third embodiments; and, the portion used to form the leg portion base end portion and the upper hold piece are wholly used to constitute a hold claw 320. In this embodiment as well, an urging action to the upper surface of the projecting portion 70 (actually, the bottom surface of the recessed groove 74) and the prevention of removal of the pad clip 310 can be carried out only by the hold claw 320. Therefore, the present embodiment can also be regarded as a portion of the invention. Here, in this case, an axial direction movement preventive claw 324a may preferably be formed in the connecting piece 324 of the sandwiching portion 316.

Although the invention has been described heretofore in detail with reference to the specific embodiments thereof, it is obvious to those skilled in the art that other various changes and modifications are also possible without departing from the spirit and scope of the invention.

The present patent application is based on the Japanese Patent Application (Patent Application No. 2008-181333) filed on July 11th, 2008 and thus the contents thereof are incorporated herein for reference.

### Industrial Applicability:

The invention can be applied to a pad clip which is used in a disc brake apparatus.

### Description of Reference Numerals and Sighs:

- 10:: Pad clip
- 12:: Bridge portion
- 14 (14a, 14b):: Leg portion
- 15 (15a, 15b):: Leg portion base end portion
- 16 (16a, 16b):: Sandwiching portion
- 18:: Upper hold piece
- 20:: Hold claw
- 20a:: Leading end
- 22:: Spring piece
- 24:: Connecting piece
- 26:: Lower hold piece
- 30:: Axial direction movement preventive claw
- 32 (32a, 32b):: Pad hold portion
- 34:: Torque receiving surface
- 36:: Pad hold piece
- 50:: Support member
- 52 (52a to 52d):: Torque receiving portion
- 54:: Support member bridge portion
- 56:: Main frame
- 58:: Sub frame
- 70:: Projecting portion
- 72:: Upper surface
- 74:: Recessed groove
- 74a:: Wall surface
- 76:: Lower surface
- 78:: Torque receiving portion

## Claims

1. A pad clip for a disc brake apparatus comprising:
a sandwiching portion configured to sandwich a projecting portion formed in a support member of the disc brake apparatus,
wherein the sandwiching portion includes:
an upper hold piece;
a lower hold piece; and
a connecting piece for connecting the upper hold piece and the lower hold piece to each other,
wherein the upper hold piece includes:
a hold claw having a leading end configured to be urged toward an upper surface of the projecting portion and to be in contact with a vertically extending wall surface of a recessed groove formed in the projecting portion; and
a spring piece for urging the hold claw, and
wherein the spring piece is configured not to be in contact with the upper surface of the projecting portion when the sandwiching portion sandwiches the projecting portion.

2. The pad clip for a disc brake apparatus according to Claim 1, wherein the hold claw is structured by cutting out at least a portion of the upper hold piece and by positioning a leading end of a thus cut-out plate piece between the spring piece and the lower hold piece in a vertical direction.

3. The pad clip for a disc brake apparatus according to Claim 1, further comprising:
a leg portion base end portion formed in an end portion of the upper hold piece at a side which is not connected to the connecting piece,
wherein the hold claw is structured by cutting out at least a portion of the leg portion base end portion, by bending a thus cut-out plate piece toward the lower hold piece, and by positioning a leading end of the plate piece between the spring piece and the lower hold piece in a vertical direction.

4. The pad clip for a disc brake apparatus according to Claim 1, wherein the hold claw is structured by bending a plate piece laterally extending from the spring piece toward the lower hold piece and by positioning a leading end of the plate piece between the spring piece and the lower hold piece in a vertical direction.

5. The pad clip for a disc brake apparatus according to any one of Claims 1 to 4, wherein the hold claw comprises a pair of claws respectively provided on two ends of the spring piece in a width direction.

6. The pad clip for a disc brake apparatus according to Claim 5, further comprising:
an axial direction movement preventive claw formed in the hold claw for sandwiching the projecting portion in the width direction.

7. The pad clip for a disc brake apparatus comprising:
a sandwiching portion configured to sandwich a projecting portion formed in a support member of the disc brake apparatus,
wherein the sandwiching portion includes:
an upper hold piece;
a lower hold piece; and
a connecting piece for connecting the upper hold piece and lower hold piece to each other,
wherein the pad clip further comprising:
a plate piece extending from an end portion of the upper hold piece which is not connected to the connecting piece and bent toward the lower hold piece,
wherein a leading end of the plate piece is configured to be in contact with a vertically extending wall surface of a recessed groove formed in the projecting portion,
wherein the leading end of the plate piece is configured to be urged toward an upper surface of the projecting portion, and
wherein the upper hold piece itself is configured, when the sandwiching portion sandwiches the projecting portion, not to be in contact with the upper surface of the projecting portion.

8. The pad clip for a disc brake apparatus according to Claim 7, wherein the pad clip comprises: an inner side pad clip to be mounted onto an inner side of the support member; and an outer side pad clip to be mounted onto an outer side of the support member,
wherein the pad clip further comprises: an extension portion extending from the upper hold piece and connecting the inner side pad clip and the outer side pad clip to each other.
